# EUROPEAN PATENT APPLICATION

(11) **EP 2 047 741 A1**
(43) Date of publication of application: **15.04.2009**
(21) Application number: 08166274.4
(22) Date of filing: 09.10.2008
(51) Int. Cl.: A01G 25/16

(54) **Junction box for solenoid valves of an irrigation system, with removable solenoid valves.**

(30) Priority: 12.10.2007 IT MI20070344 U
(71) Applicant: CLABER S.P.A., I-33080 Fiume Veneto Pordenone (IT)
(72) Inventor: Spadotto, Oliviano, 33170, PORDENONE (IT)
(74) Representative: Mittler, Enrico

(57) **Abstract**

A junction box (1) for solenoid valves (2) of an irrigation system is described herein, comprising a feed pipe (3) and at least one branch pipe (4) comprising a solenoid valve (2). The solenoid valve (2) is removably connected to said branch pipe (4). (Fig. 1).

## Description

The present invention relates to a junction box for solenoid valves of an irrigation system, with removable solenoid valves.

Irrigation systems for very large surface areas, such as golf courses and parks, or surface areas that are not particularly large but require differentiated irrigation on a zone-by-zone basis and at certain times are known. What all these systems share is the necessity of having irrigation nozzles located in various zones of the ground to be irrigated. It is moreover necessary to connect the various irrigation pipes leading to these nozzles to a feed pipe by means of solenoid valves. The rationalisation of irrigation systems entails grouping these solenoid valves together in junction boxes, typically underground, like almost the whole system.

A problem that arises, typical of apparatus made to work in an outdoor environment, is that of solenoid valve failures. Still today such failures are repaired on site, with the disadvantage of a large and pointless expense, since it's a specialised technician the one who must go to the customer's premises and perform on-site repair. The downtime of the irrigation system naturally coincides with the time necessary for repair and the necessary equipment must be transported to the repair site. Alternatively, the entire box must be unearthed and then reburied.

In order to satisfy customers' legitimate demands of saving costs and meet system modularity requirements to facilitate the work of installers, it was deemed necessary to remedy this disadvantage.

The object of the present invention is to provide devices that enable the functionality of the system to be quickly restored and the failure to be repaired without significant system downtimes.

According to the invention, this object is achieved by means of a junction box for solenoid valves of an irrigation system, comprising a feed pipe, and at least one branch pipe comprising a solenoid valve, characterised in that said solenoid valve is removably connected to said branch pipe.

These and other characteristics of the present invention will become more apparent from the following detailed description of an embodiment thereof, illustrated by way of a non-restrictive example in the appended drawings, in which:

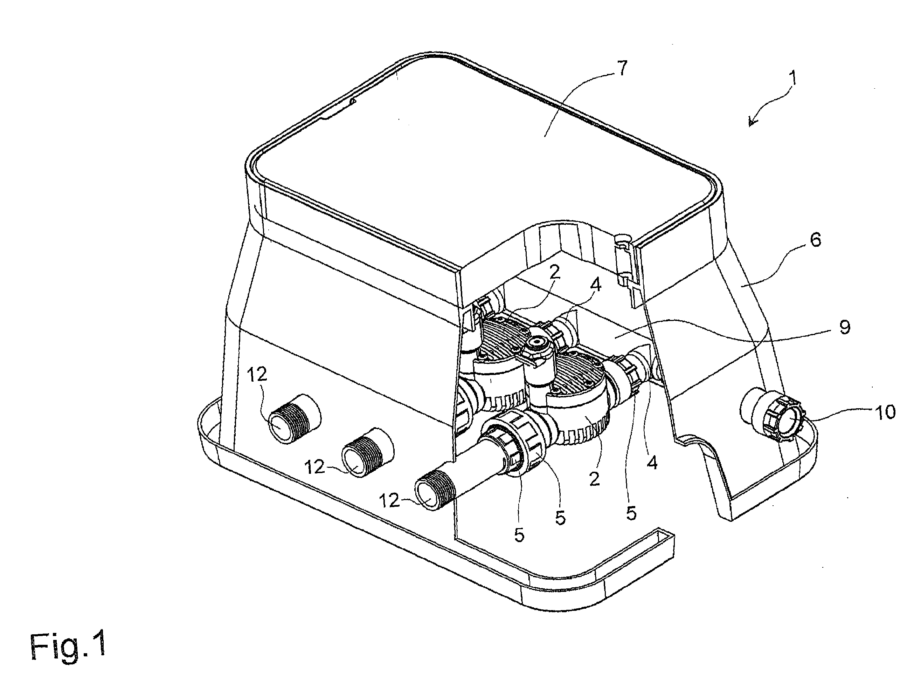

figure 1 shows an axonometric view of a junction box with a partial broken view of the casing and cover;

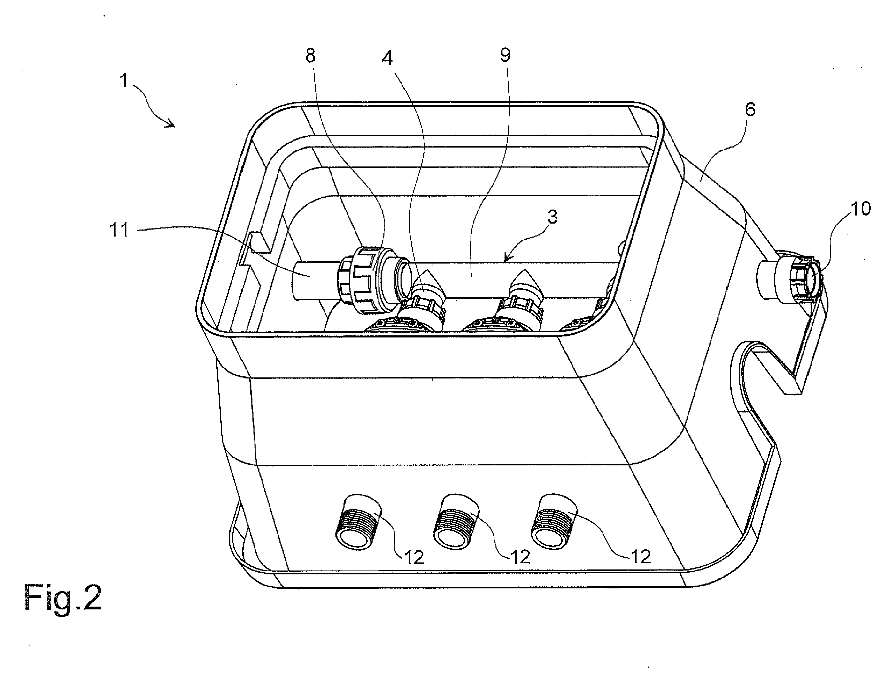

figure 2 shows an axonometric view from above of the junction box without the cover;
figure 3 shows a view from above of the junction box with the cover removed;

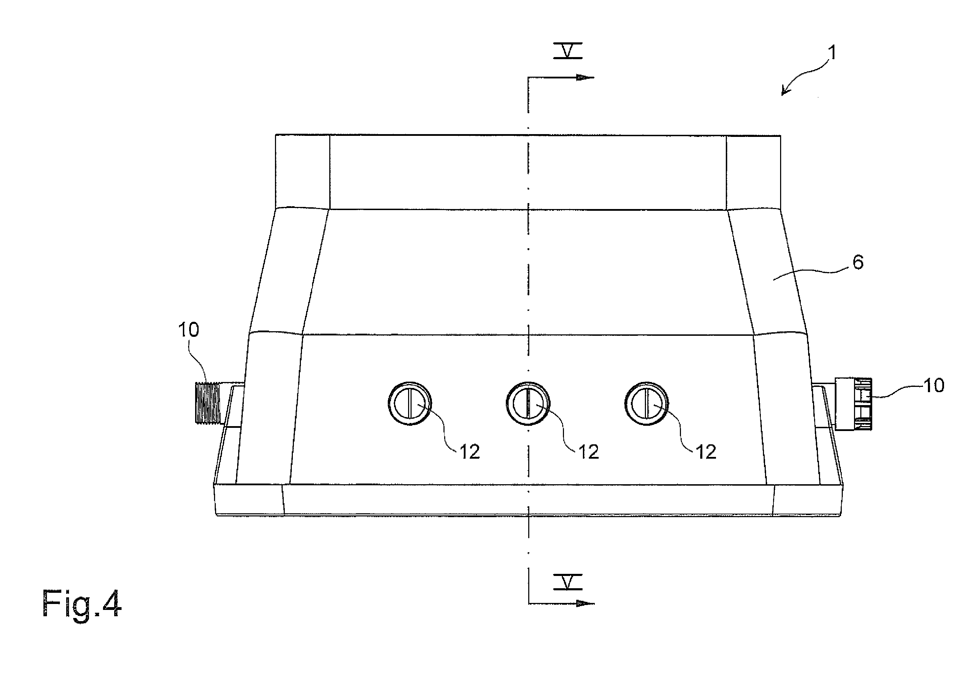

figure 4 shows a side view of the junction box;

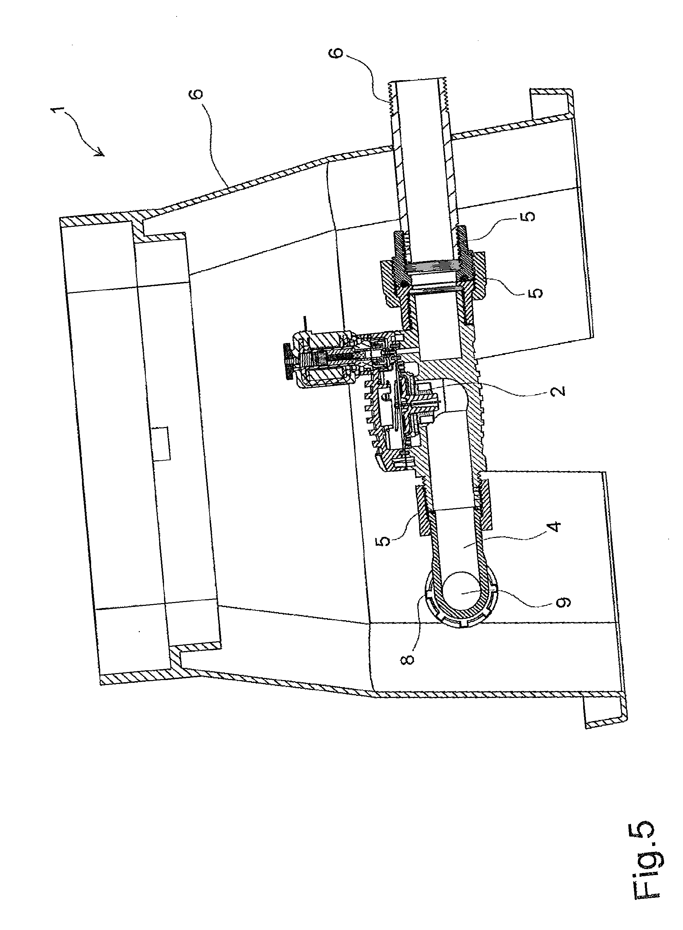

figure 5 shows a section view along the line V-V of figure 4.

With reference to the appended figures, one may note a junction box 1, intended to be put underground, solenoid valves 2, a feed pipe 3, branch pipes 4 with external connectors 12, threaded couplings 5 to connect the solenoid valves 3 to the respective branch pipes 4, an exterior casing 6 with a cover 7, an internal section 9 of the feed pipe 3, couplings 8 to connect the section 9 of the feed pipe 3 to external sections 11 of the feed pipe 3, which end with connectors 10.

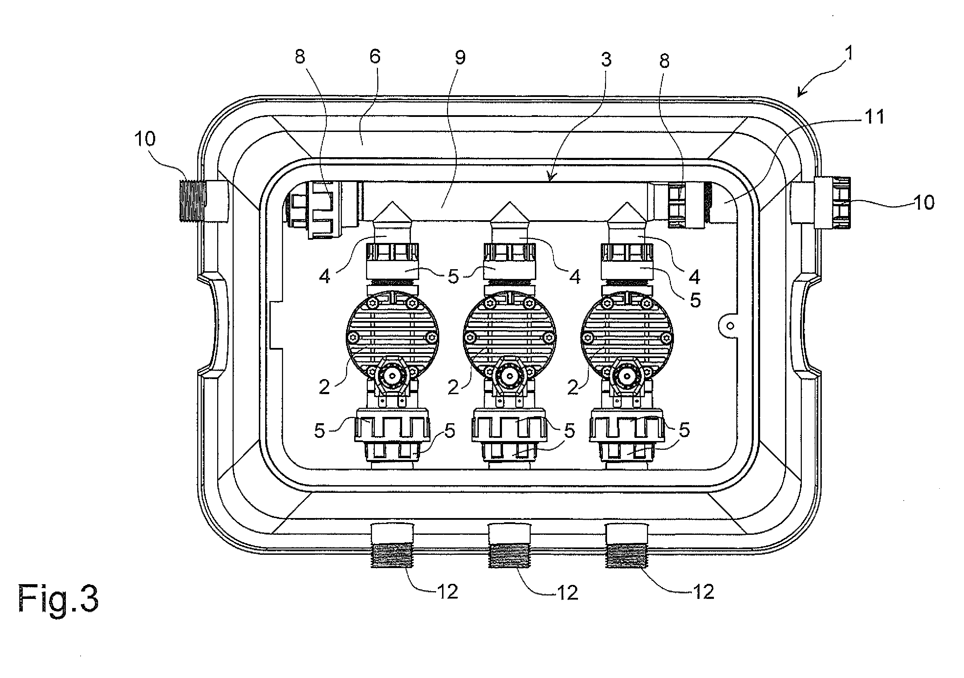

As may be better understood from figure 3, leading from the feed pipe 3 are branch pipes 4 to which the solenoid valves 2 are connected by means of couplings 5. The solenoid valves 2 are therefore easily removable.

Accordingly, in the event of a failure, the solenoid valves 2 and the respective pipes if necessary, may be rapidly replaced on site with solenoid valves and if necessary with new parts by a technician with less training than the workshop technician who will perform the repairs and hence at a lower cost. Replacement times are shorter than the time necessary for repairs.

The field technician will take the faulty solenoid valve back to his firm and the workshop technician, using suitable equipment and exploiting the possibility of optimising work times, will perform the repair faster and at a lower cost than if he were required to go on site.

## Claims

1. Junction box (1) for solenoid valves (2) of an irrigation system, comprising a feed pipe (3), and at least one branch pipe (4) comprising a solenoid valve (2), **characterised in that** said solenoid valve (2) is removably connected to said branch pipe (4).

2. Junction box (1) according to claim 1, **characterised in that** said solenoid valve (2) is connected to said branch pipe (4) by means of threaded couplings (5) situated upstream and downstream therefrom.

3. Junction box (1) according to one or more of the preceding claims, **characterised in that** it comprises an exterior casing (6) that can be put underground.

4. Junction box (1) according to claim 3, **characterised in that** it is provided with a top closure cover (7).

5. Junction box according to any one of the preceding claims, **characterised in that** the feed pipe (3) comprises an internal section (9) connected by couplings (8) to external sections (11) provided with connectors (10).
